# EUROPEAN PATENT APPLICATION

(11) **EP 2 248 450 A1**
(43) Date of publication of application: **10.11.2010**
(21) Application number: 09159473.9
(22) Date of filing: 05.05.2009
(51) Int. Cl.: A47J 19/06, B26D 3/26, B30B 1/12

(54) **Device for handling food**

(71) Applicant: Roes, Gunter, 2360 Oud-Turnhout (BE)
(72) Inventor: Roes, Gunter, 2360 Oud-Turnhout (BE)
(74) Representative: BiiP cvba

(57) **Abstract**

Device for handling food, the device comprising a frame; a pressure unit (6); and a food handling unit (5), wherein the food handling unit (5) is fixed to the frame, while the pressure unit (6) is movably mounted on the frame, **characterized in that** pressure unit (6) is movable along the frame in an upward direction towards the food handling unit (5);

## Description

### Field of the Invention

The present invention generally relates to a device for handling food, preferably a home appliance adapted for slicing food, especially fruit such as apples.

### Background of the Invention

It is generally acknowledged that vegetables and fruit are vital part to healthy diet. This fact has gained importance in today's stressed climate where junk and fast food play is accounted for a high number of different diseases.

As a response to this need, solutions are looked for which increases the consumption of vegetables and fruits in a fast and yet convenient way.

While it is known to slice food like an apple and to put the sliced parts in a cup, it is equally known that the slicing of food and putting it in a cup necessitates handling of the food after it has been sliced, which not only inconvenient in further handling but which is also unfavourable with respect to hygiene. In addition, both actions are needed which discourages people to effectively digest the sliced apple.

Moreover, home appliance devices are known for slicing food, wherein the food is positioned on a food handling tool and subsequently pressed on or through the food handling tool by means of a pressure unit. Such devices are described in for example US 2005/0229760; US 2,703,522 and US 5,520,105. In all these devices, means are provided for moving the pressure unit along a frame in a top-downward direction towards the food handling tool for handling the food.

In these known devices, the means for moving the pressure unit in a downward direction are position above the food handling unit and necessitate regular cleaning to avoid accumulating dust and other particles to contaminate the food to be handled.

Clearly, regular cleaning and the idea of potential contamination do not promote the use of the known home appliance devices and do certainly not increase the consumption of vegetables and fruits in a fast and yet convenient way.

It is clear from the above that there remains a demand for a technical solution which not only motivates the consumer to digest more fruit and vegetables but also which does this in a convenient and hygienic way.

The present invention meets this demand by providing a specifically designed convenient home appliance device that allows for a fast and user friendly food handling while still ensuring maximum hygiene and minimum pre- and post cleaning need.

### Summary of the Invention

The present invention concerns a device for handling food, the device comprising a frame; a pressure unit; and a food handling unit, wherein one of either units is fixed to the frame, while the other unit is movably mounted on the frame, **characterized in that** the movable unit is movable along the frame in an upward direction towards the fixed unit.

The food handling unit preferably comprises a cartridge that is, for example, slideably mounted on the frame and a food handling tool removably, in particular slideably, mounted in the cartridge.

According to a preferred embodiment, the cartridge is provided with a U-shaped slot for accommodating the food handling tool.

The device according to the present invention further preferably comprises means for moving one of said units along the frame, said means being positioned on the side of the movable unit facing away the fixed unit. The above means can comprise a hinge joint with two arms rotatably connected to one another by a pin, the free end of one arm being connected to the frame, the free end of the other arm being connected to the movable unit.

The movable unit preferably comprises a base mechanically separating the means for moving said unit from the space defined between both units.

The above mentioned frame preferably comprises a base plate with at least three and preferably four upwardly and parallel directed rods provided thereon, said rods defining a guide for the movable unit. The movable unit thereby comprising bushes guided over said rods of the frame.

According to a preferred embodiment of the device of the present invention, the pressure unit is movably mounted on the frame and the food handling unit, in particular a cartridge with a fruit slicer mounted therein, is fixed to the frame.

The present invention also relates to a method for handling food, said method comprising the steps of:

(a) providing an article of food between a pressure unit and a food handling unit;

(b) moving one of said units with the article of fruit provided thereon towards the other unit, **characterized in that** the article of food is moved in an upward direction towards the other unit.

Preferably, the food handling unit is a food cup, annex food slicer and the article of food is pressed through the fruit slicer in a bottom up direction, while the fruit slicer is kept immobile.

### Brief Description of the Drawings

Figure 1 represents a side view of a device according the present invention;

Figure 2 represents a view according to arrow II in figure 1;

Figure 3 represents a view according to arrow III in figure 1;

Figure 4 represents a food handling tool that can be used in a device according the present invention.

### Detailed Description of Embodiment(s)

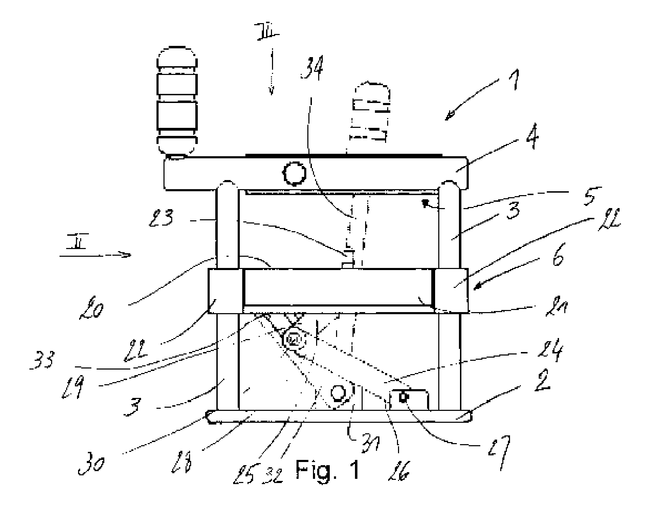

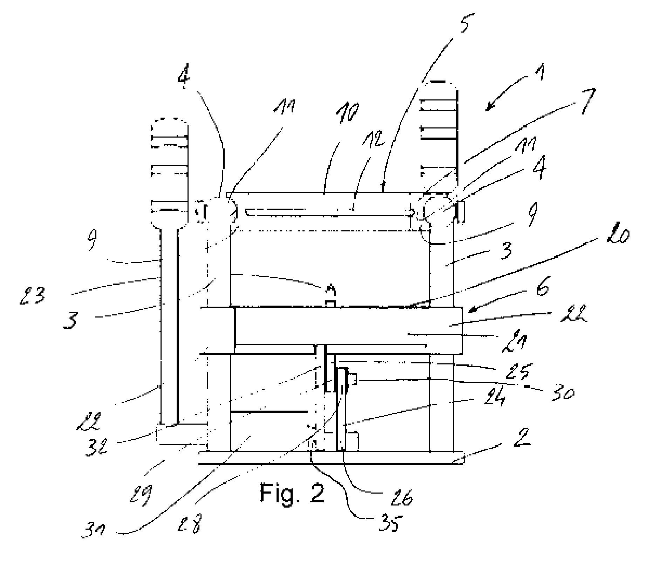

Figures 1 to 3 represent a preferred embodiment of the device according to the present invention. According to this preferred embodiment, the device 1 comprises a frame with a base plate 2 and at least three and preferably four upwardly and parallel directed rods 3 provided thereon. The rods 3 are connected in pairs at their free ends by bars 4.

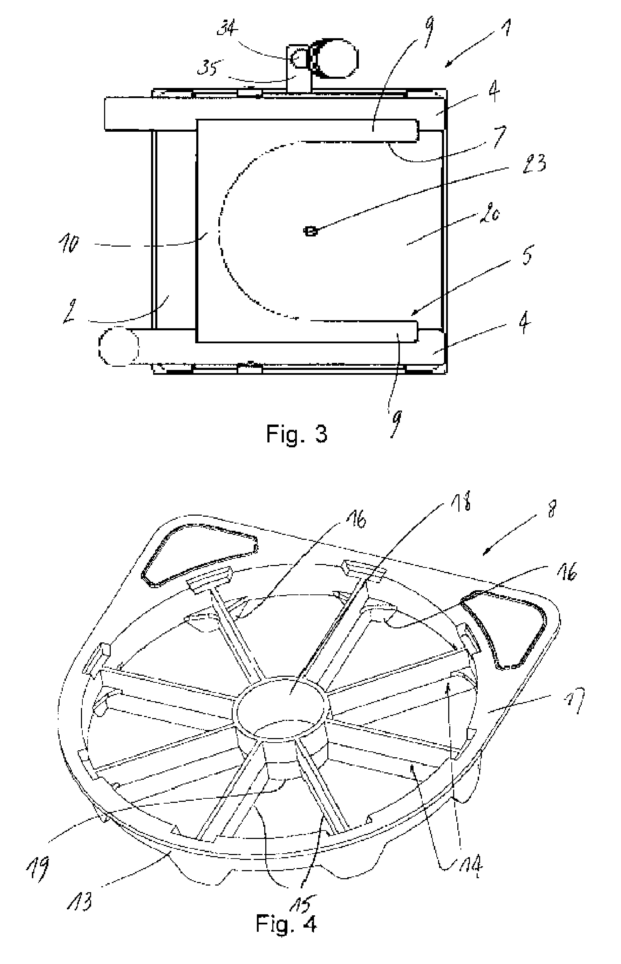

The device according the present invention further comprises two units 5 and 6, a first of these units, further referred to as a food handling unit 5, is fixedly mounted on the frame. In this case, the first unit 5 comprises a cartridge 7 and a food handling tool 8 as represented in figure 4.

The cartridge 7 is configured as a horse-shoe shaped element with two legs 9 and a link 10, the outwardly directed sidewalls 11 of the legs 9 are complementary to the circumferential shape of the bars 4 of the frame, thereby allowing to slide the cartridge between the bars 4 to fix the cartridge to the frame.

In the inner sidewalls of the legs and the corresponding sidewall of the link 10 a slot 12 is provided for accommodating the food handling tool 8.

Said food handling tool 8 can for example be a fruit cup annex fruit slicer such as represented in figure 4. Such fruit cup comprises an outer rim 13 and and a base provided therein. According to the invention, the base comprises a number of cutting elements 14 extending radially inward from the outer rim 13, each cutting element having a cutting edge 15 directed in a longitudinal direction of the rim 13.

Preferably, the outer rim 13 at least partially extends beyond the cutting edges 15 of the cutting elements 14. In this case this is achieved by providing several legs 16 on the outer rim 13. Opposite said legs 16, the outer rim is provided with a transversal outwardly extending flange 17 that is preferably prolonged at some discrete places around the rim, such that the flange 17 has a non-circular contour complementary to the slot 12 provided in the cartridge 7.

In the embodiment according to figure 4, the flange 17 is extended at two distinct spots both positioned in a same half-section of the food cup 8.

In the present embodiment the cutting elements 14 extend between the outer rim 13 and an inner rim 18 having a cutting edge 19. Preferably the cutting edges 15 of the several cutting elements are all situated at a same level in view of the outer rim 13. The cutting edge 19 of the inner rim 18 too is preferably situated at that same level.

The food handling tool 8 is preferably made of a plastic material such as for example POM and preferably is a one-piece article.

Turning now to the above mentioned second unit 6, referred to as a pressure unit 6, it will be appreciated from figure 1, that this unit comprises a base 20 and a circumferential vertically extending skirt 21. The skirt is provided with four bushes 22 slideably enveloping the rods 3 of the frame. Preferably, a pin 23 protrudes from the base 20 for fixing food thereon.

Finally, means are provided for moving the pressure unit 6, in an upward direction along the frame towards the food handling unit 5. In the present embodiment, said means comprise a hinge mechanism comprising two arms 24 and 25. An end portion 26 of a first arm 24 is pivotably connected to the base plate 2 of the frame by means of a pin 27. The second end 28 of said arm is pivotably connected to a first end 29 of the second arm 25 by means of a bolt 30. The second end of the second arm is pivotably connected to the base 20 of the pressure unit 6 by means of a pin not shown in the drawings. As will be appreciated, the connection of the hinge mechanism with the base 20 of the pressure unit is located on the side of the pressure unit facing away the food handling unit 5.

The means further comprise a bush 31 fixed on the base plate 2 of the frame, accommodating a transmission for rotating a guiding plate 32 that is provide with a guiding slot 33 wherein the above mentioned bolt 30 is slideably accommodated. The guiding plate 32 is driven in rotation by a handle 34 connected to a bar 35 extending into the bush 31 and driving the transmission.

In a rest position, the pressure unit 6 is positioned close to the base plate 2 of the frame, with the hinge in a folded up position. A piece of food, such as an apple can than easily be positioned on the base of the pressure unit 6 and fixed thereon by means of pin 23.

Once the piece of food is correctly positioned, the handle 34 can be operated to pivot the guiding plate 32 and thereby move bolt 30 such that the hinge mechanism moves the pressure unit in an upward direction towards the food handling unit 5. In this case and with the described food cup, by moving the pressure unit 6 upwards, the piece of food is forced through the fruit slicer in an upward or bottom up direction.

In brief, for handling the food, the pressure unit 6 is moved in an upward direction towards the food handling unit 5.

During the entire food handling operation, the joint mechanism, nor any other moving parts for moving the pressure unit 6 contacts or is positioned above the article of food. Moreover, the base 20 of the pressure unit 6 mechanically separates the joint mechanism from the article of food, guaranteeing maximum hygiene and minimum cleaning of the moving parts for subsequent use of the device hygienically.

It will be appreciated by a person skilled in the art that for the present invention, the food handling tool can be of any type, such as a food slicer, a fruit juicer, food peeler, etc. In the specific case of a fruit juicer, the food handling unit is movably mounted on the frame in a same manner as the pressure unit is in the above described embodiment, while the pressure unit is fixedly mounted on the bars 4.

The food handling tool 8 can be of a type comprising a cup or reservoir for collecting the juice of an orange or such, with a convex shaped element provided at the free edge of the cup. The convex shaped element is hereby preferably provided with a plurality of perforations and with a stepped outer surface.

The pressure unit is in this case preferably a inverted cup that allows to compress a orange or such on the food handling tool.

In this case, the food handling unit comprises a base that mechanically separates the joint mechanism from the article of food and that supports the food handling tool.

Further it is apparent that the device can be constructed such that the food handling unit 5 functions as pressure unit 6 and vice versa and that the joint mechanism for moving one of the units 5, 6 can be executed according to many variants such as an electromotor of such.

The present invention is by no means limited to the embodiments described above and represented in the accompanying figures; on the contrary, such a device for handling food can be made in various executions while still remaining within the scope of the invention.

## Claims

1. Device for handling food, the device comprising a frame; a pressure unit (6); and a food handling unit (5), wherein the food handling unit (5) is fixed to the frame, while the pressure unit (6) is movably mounted on the frame, **characterized in that** pressure unit (6) is movable along the frame in an upward direction towards the food handling unit (5).

2. Device according to claim 1, wherein the food handling unit comprises a cartridge (7) mounted on the frame and a food handling tool (8) removably mounted in the cartridge (7).

3. Device according to claim 2, wherein the cartridge (7) is slideably mounted on the frame.

4. Device according to claim 2 or 3, wherein the food handling tool (8) is slideably mounted in the cartridge (7).

5. Device according to any of claims 2 to 4, wherein the cartridge (7) is provided with a U-shaped slot (12) for accommodating the food handling tool (8).

6. Device according to any of the preceding claims, further comprising means for moving the pressure unit (6) along the frame, said means being positioned on the side of the pressure unit (5) facing away the food handling unit (6).

7. Device according to claim 6, wherein said means comprise a hinge mechanism with two arms (24, 25) rotatably connected to one another by a pin (27), the free end of one arm being connected to the frame, the free end of the other arm being connected to the pressure unit (6).

8. Device according to claim 6, wherein the pressure unit comprises a base (20) mechanically separating the means for moving said unit from the space defined between both units.

9. Device according to any of the preceding claims, wherein the frame comprises a base plate (2) with at least three upwardly and parallel directed rods (3) provided thereon, said rods (3) defining a guide for the pressure unit (6).

10. Device according to claim 9, wherein the movable unit comprises bushes guided over said rods (3) of the frame.

11. Device according to any of the preceding claims, wherein the food handling unit (5) is configured as a food slicer.

12. Device according to any of the preceding claims, wherein the food handling unit (5) comprises a cartridge (7) fixed to the frame and a food slicer removably mounted in the cartridge (7).

13. Device according to any of the preceding claims, wherein the device (1) is configured as a home appliance.

14. Method for handling food, the method comprising the steps of: (a) providing an article of food on a pressure unit (6); (b) moving the pressure unit (6) with the article of food provided thereon towards a food handling unit (5), **characterized in that** the article of food is moved in an upward direction towards the food handling unit (5).

15. Method according to claim 14, wherein the food handling unit (5) is configured as a food slicer and wherein the article of food is pressed through the food slicer in a bottom up direction, while the food slicer is kept immobile.
